# EUROPÄISCHE PATENTSCHRIFT

(11) **EP 1 426 310 B1**
(45) Veröffentlichungstag und Bekanntmachung des Hinweises auf die Patenterteilung: **08.02.2006**
(21) Anmeldenummer: 03027532.5
(22) Anmeldetag: 29.11.2003
(51) Int. Cl.: B65G 1/04, B66F 9/07

(54) **Regalbediengerät**
Stacker crane
Transstockeur

(30) Priorität: 05.12.2002 DE 10257109
(43) Veröffentlichungstag der Anmeldung: 09.06.2004
(73) Patentinhaber: EISENMANN Maschinenbau GmbH & Co. KG, 71032 Böblingen (DE)
(72) Erfinder: Ehrenleitner, Franz, 70439 Stuttgart (DE)
(74) Vertreter: Ostertag, Ulrich

(56) Entgegenhaltungen:
- GB-A- 777 989
- US-A- 3 428 195

## Beschreibung

Die Erfindung betrifft ein Regalbediengerät mit
a) einem Tragwagen, der mittels eines Antriebs an mindestens einer im wesentlichen horizontalen Tragschiene entlang eines Regalganges verfahrbar ist;
b) einer von dem Tragwagen mitgeführten Hubplattform zur Aufnahme von Lagergut;
c) einer Hubvorrichtung, mit welcher die Hubplattform gegenüber dem Tragwagen in vertikaler Richtung bewegbar ist;
d) einer Stabilisierungseinrichtung, welche ein seitliches Auslenken der Hubplattform gegenüber dem Tragwagen verhindert
e) wobei die Hubvorrichtung mindestens drei Zugmittel umfasst, an denen die Hubplattform von dem Tragwagen abgehängt ist.

Regalbediengeräte dieser Art dienen dazu, Lagergut in den Fächern von Hochregalen einzulagern und aus diesen wieder zu entnehmen. Die Hochregale erstrecken sich dabei entlang eines Regalganges, in dem das Regalbediengerät verfahrbar ist. Zur Erzielung eines hohen Umschlages des Lagergutes und damit zur Minimierung der für eine bestimmte Kapazität erforderliche Größe des Hochregallagers insgesamt sollte die Geschwindigkeit, mit welcher die Hubplattform von einer Position zur anderen verfahrbar ist, möglichst groß sein. Da die beschleunigte Masse und die Verbindungseinrichtung, über welche die Hubplattform mit dem Tragwagen verbunden ist, ein schwingungsfähiges System bilden, bedeutet eine hohe Beschleunigung regelmäßig auch die Gefahr von großen Schwingungen der Hubplattform.

Bekannte Regalbediengeräte der eingangs genannten Art weisen daher neben dem Tragwagen, der im allgemeinen auf dem Raumboden verfahrbar ist, zur Stabilisierung der Hubplattform eine massive Säule auf, an der die Hubplattform bei ihrer Vertikalbewegung geführt ist. Um die erforderliche Steifigkeit der Führungssäule zu erzielen, werden große Massen benötigt. Regalbediengeräte dieser Art können ein Gesamtgewicht von 25 Tonnen erreichen. Es ist klar, dass enorme Antriebsleistungen erforderlich sind, um diese Regalbediengeräte mit hohen Beschleunigungen betreiben zu können. Trotz der massiven Führungssäulen ergeben sich erhebliche Schwingungsprobleme, zumal die Eigenfrequenzen des schwingungsfähigen Systemes auf Grund der hohen Massen verhältnismäßig niedrig liegen. Die GB-A-777 989 offenbart ein solches Regalbediengerät.

Aufgabe der vorliegenden Erfindung ist es, ein Regalbediengerät der eingangs genannten Art derart auszugestalten, dass die Hubplattform sehr schnell beschleunigbar ist und Schwingungsprobleme minimiert sind.

Diese Aufgabe wird erfindungsgemäß dadurch gelöst, dass
f) die Stabilisierungseinrichtung umfasst:
   fa) einen Stabilisierungswagen, der mittels eines eigenen Antriebs entlang mindestens einer in vertikalem Abstand parallel zur Tragschiene verlaufenden Führungsschiene verfahrbar ist;
   fb) eine im wesentlichen starre, eine horizontale Erstreckungskomponente besitzende Verbindungskonstruktion, welche sowohl an der Hubplattform als auch an dem Stabilisierungswagen angelenkt ist;
   fc) eine Steuerung, welche den horizontalen Abstand zwischen der Hubplattform und dem Stabilisierungswagen durch entsprechendes Verfahren des Stabilisierungswagens bei einer Veränderung der Höhenposition der Hubplattform so verändert, dass die Hubplattform gegenüber dem Tragwagen nur gewünschte, insbesondere vertikale, Bewegungen durchführen kann.

Unter dem Begriff "Zugmittel" werden vorrangig Seile, Ketten, Gurte oder dergleichen verstanden. Nachfolgend wird stellvertretend für derartige Zugmittel zur terminologischen Vereinfachung von "Seilen" gesprochen.

Grundgedanke der Erfindung ist es, bei allen beschleunigten Teilen des Regalbediengerätes auf geringstmögliche Masse zu achten. Dies hat zur Folge, dass einerseits die zur Beschleunigung erforderlichen Kräfte und damit auch die von den Antrieben zu erbringende Leistung gering sein können. Zum Anderen werden die Resonanzfrequenzen in einen höheren Frequenzbereich verlagert, wo sie leichter beherrschbar sind. Masseeinsparungen gelingen der vorliegenden Erfindung sowohl bei der Ausgestaltung der Hubvorrichtung als auch der Stabilisierungseinrichtung. Die Hubvorrichtung umfasst erfindungsgemäß mindestens drei Seile, also keine starren Komponenten, und erreicht so das Minimum an Masse, das denkbar ist. Die Stabilisierungseinrichtung verzichtet auf massive, schwere Elemente, und verlässt sich statt dessen auf eine leicht ausbildbare Verbindungsstruktur, mit welcher gewissermaßen die Hubplattform von der Seite her stets so gehalten wird, dass sie sich gegenüber dem Tragwagen nur in der gewünschten Weise, im allgemeinen vertikal, bewegen kann. Die Verbindungsstruktur findet ihren Halt an dem zusätzlich erfindungsgemäß vorgesehenen Stabilisierungswagen. Da bei einer Höhenbewegung der Hubplattform der Winkel verändert wird, den die Verbindungsstruktur zur Horizontalen einnimmt, muss der horizontale Abstand zwischen dem Stabilisierungswagen und der Hubplattform proportional zum Kosinus dieses Neigungswinkels verändert werden. Dies geschieht mit Hilfe einer Steuerung, der hierzu ein für die Höhenposition der Hubplattform repräsentatives Signal zugeführt wird. Bei einer gleichzeitigen Horizontalbewegung des Tragwagens und Vertikalbewegung der Hubplattform wird der Stabilisierungswagen so gesteuert, dass einer horizontalen Bewegungsgeschwindigkeit, welche derjenigen des Tragwagens entspricht, die Abstandsveränderung überlagert wird, die zur Aufrechterhaltung der gewünschten Bewegung, insbesondere einer exakten Vertikalbewegung, der Hubplattform gegenüber dem Tragwagen erforderlich ist.

Das erfindungsgemäße Regalbediengerät stellt ein kinematisch eindeutig bestimmtes System dar, dessen.Bewegungsabläufe computermäßig ohne weiteres berechnet werden können, ohne dass zweideutige Lösungen auftreten würden.

Vorzugsweise umfasst die Verbindungsstruktur zwei parallele Stangen. Diese Stangen werden nur auf Druck oder Zug beansprucht, können also vergleichsweise dünn gehalten werden. Hierdurch wird erneut diejenige Masse reduziert, die bei der Bewegung der Hubplattform zu beschleunigen ist.

Die Stangen sind vorzugsweise durch Streben zu einem Fachwerk versteift. Da die Verbindungsstruktur im wesentlichen die Feder des schwingungsfähigen Systems bildet, führt diese Versteifung zu einer erwünschten Verlagerung der Resonanzfrequenz des schwingungsfähigen Systemes zu höheren Werten.

Um das gesamte Regal mit dem erfindungsgemäßen Regalbediensystems erreichen zu können, kann die Führungsschiene, auf welcher sich der Stabilisierungswagen bewegt, an einem Ende über das Regal hinaus geführt werden. Eine Alternative hierzu ist, dass die "effektive Länge" der Verbindungsstruktur verkürzbar ist. Normalerweise kann der Tragwagen nicht in horizontaler Richtung an dem Stabilisierungswagen vorbei bewegt werden, da die Länge der Verbindungsstruktur notwendig größer als der vertikale Abstand zwischen der Tragschiene und der Führungsschiene ist. Wenn jedoch die effektive Länge der Verbindungsstruktur verkürzbar ist, kann sich der Tragwagen in horizontaler Richtung an dem Stabilisierungswagen vorbei bewegen und dann auf der anderen Seite des Stabilisierungswagens seine normale Ein- und Auslagerfunktion wieder aufnehmen.

Die "effektive Länge" der Verbindungsstruktur kann beispielsweise dadurch verkürzbar sein, dass mindestens ein Schwenkarm, der verschwenkbar mit einem Ende der Verbindungsstruktur verbunden ist, an dem Stabilisierungswagen angelenkt und an diesem in mindestens einer Winkelposition verriegelbar ist. Bei dieser Ausgestaltung wechseln der Tragwagen und die mit diesem mitgeführte Hubplattform die Seite des Stabilisierungswagens auf folgende Weise: Der Stabilisierungswagen wird angehalten und die Verriegelung des Schwenkarmes an dem Stabilisierungswagen wird gelöst. Nunmehr kann sich der Tragwagen in horizontaler Richtung auf den Stabilisierungswagen zubewegen. Die "effektive Länge" der Verbindungsstruktur wird dadurch verkürzt, dass der Schwenkarm des Stabilisierungswagens nach unten ausgeschwenkt wird. Nach Überwinden eines "Totpunktes", in dem sowohl der Schwenkarm als auch die verbindungsstruktur senkrecht stehen, wird der Schwenkarm wieder an den Stabilisierungswagen herangeführt. Hat der Tragwagen einen ausreichenden Abstand von dem Stabilisierungswagen erreicht, wird der Schwenkarm wieder an dem Stabilisierungswagen verriegelt. Nunmehr kann der Betrieb des Regalbediengerätes wieder in der normalen Weise aufgenommen werden.

Auch an der Hubplattform kann mindestens ein Schwenkarm, der verschwenkbar mit dem anderen Ende der Verbindungsstruktur verbunden ist, angelenkt und an diesem in einer Winkelpositon verriegelbar sein. Dieser zusätzliche Schwenkarm an der Hubplattform gibt dem Gesamtsystem beim Wechsel von Tragwagen und Hubplattform von einer Seite des Stabilisierungswagens zur anderen einen zusätzlichen Freiheitsgrad.

Eine alternative Art und Weise, die "effektive Länge" der Verbindungsstruktur verkürzen zu können, besteht darin, dass sie gegeneinander teleskopierbare und in mindestens einer Relativlage gegeneinander verriegelbare Elemente aufweist.

Da die Stabilisierungsfunktion des Stabilisierungswagens bei einem Seitenwechsel von Tragwagen und Hubplattform nicht gegeben ist, empfiehlt sich eine Ausgestaltung der Erfindung, bei welcher die Hubplattform in ihrer obersten Position an dem Tragwagen verriegelbar ist. Vor Beginn eines Seitenwechsels wird die Hubplattform in diese verriegelte Position gebracht, so dass auf diese Weise seitliche Schwingungen der Hubplattform unterbunden sind.

Ein Ausführungsbeispiel der Erfindung wird nachfolgend an Hand der Zeichnung näher erläutert; es zeigen
- Figur 1: perspektivisch ein erfindungsgemäßes Regalbediengerät vor einem Hochregal;
- Figur 2: die Seitenansicht zu Figur 1;
- Figur 3: das Regalbediengerät der Figur 1 in einer anderen Position an dem Hochregal;
- Figur 4: die Seitenansicht zu Figur 3;
- Figur 5: das Regalbediengerät der Figuren 1 bis 4 in einer weiteren Position an dem Hochregal;
- Figur 6 bis 8: schematisch die Bewegungsabläufe bei einem Seitenwechsel des Tragwagens, der Teil des Regälbediengerätes ist.

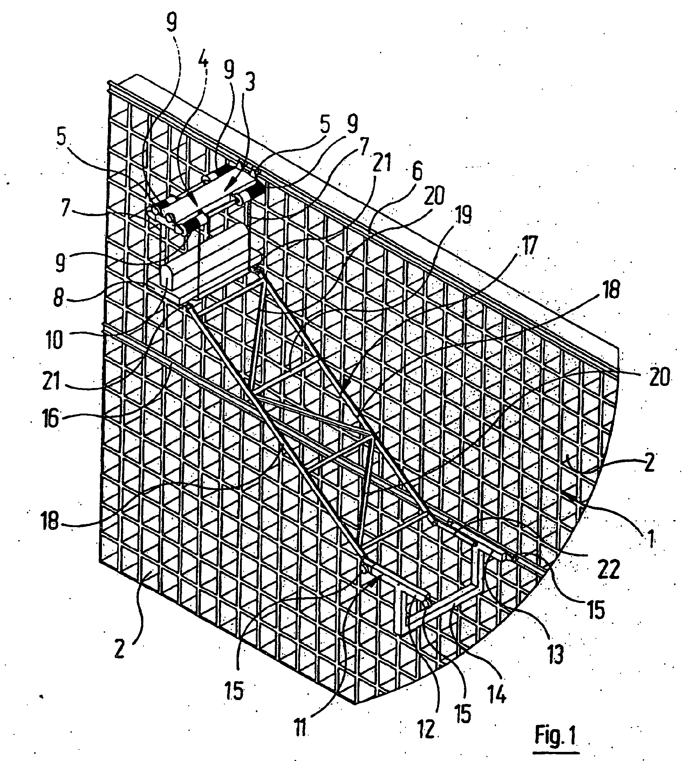

In Figur 1 ist mit dem Bezugszeichen 1 ein herkömmliches Hochregal gekennzeichnet, das aus einem Stahlbau besteht und in bekannter Weise eine Vielzahl von Regalfächern 2 aufweist, in denen Lagergut untergebracht werden kann. Das Beschicken der Lagerfächer 2 bzw. das Entnehmen von Lagergut aus diesen wird von einem Regalbediengerät besorgt, das insgesamt das Bezugszeichen 3 trägt. Das Regalbediengerät 3 umfasst einen Tragwagen 4, der an gegenüberliegenden Seiten zwei von einem nicht dargestellten Motor angetriebene Tragrollen 5 aufweist. Das jeweils auf einer Seite des Tragwagens 4 befindliche Tragrollenpaar 5 läuft in einer Tragschiene 6, die am oberen Rand des Hochregales 1 angebracht ist. Nur eine der beiden Tragschienen 6 und nur eines der beiden Hochregale 1 sind in der Zeichnung dargestellt; das zweite Hochregal ist parallel zu dem dargestellten so zu denken, dass die in der Zeichnung links angeordneten Tragrollen 5 des Tragwagens 4 in eine entsprechende Tragschiene des weiteren Hochregales 1 eingreifen. Zwischen den beiden Hochregalen 1 wird auf diese Weise ein Regalgang gebildet, in dem sich das Regalbediengerät 3 bewegt.

Der Tragwagen 4 des Regalbediengerätes 3 ist über vier Seile 7 mit einer Hubplattform 8 verbunden. Der Tragwagen 4 ist mit vier Seiltrommeln 9 versehen, die von nicht dargestellten Motoren angetrieben sind und auf denen die oberen Endbereiche der Seile 7 aufgewickelbar sind. Durch Betätigen der Seiltrommeln 7 im entsprechenden Drehsinn kann die Hubplattform 8 in bekannter Weise abgesenkt oder angehoben werden.

Die Hubplattform 8 trägt das Lagergut 10, das bei richtiger Positionierung der Hubplattform 8 vor dem gewünschten Lagerfach 2 mittels einer in der Zeichnung nicht dargestellten, bekannten Verschiebeeinrichtung in das Lagerfach 2 eingeschoben werden kann. In entsprechender Weise kann in einem Lagerfach 2 befindliches Lagergut von dieser Verschiebeeinrichtung auf die Hubplattform 8 übernommen werden.

Um die Hubplattform 8 gegen seitliches Schwingen zu stabilisieren, weist das Regalbediengerät 3 einen Stabilisierungswagen 11 auf. Der Stabilisierungswagen 11 umfasst zwei Längstraversen 12, 13, die durch ein U-Profil 14 miteinander verbunden sind. An den beiden Längstraversen 12, 13 sind jeweils zwei durch nicht dargestellte Motoren angetriebene Antriebsrollen 15 vorgesehen. Die der Längstraverse 13 zugeordneten Antriebsrollen 15 laufen in einer Führungsschiene 16, die parallel zur Tragschiene 6 des Tragwagens 4, unterhalb von dieser, ebenfalls an dem Hochregal 1 befestigt ist. Eine entsprechende Führungsschiene ist an dem in Figur 1 nicht dargestellten Hochregal angebracht. In ihr laufen die der Längstraverse 12 des Stabilisierungswagens 11 zugeordneten Antriebsrollen 15.

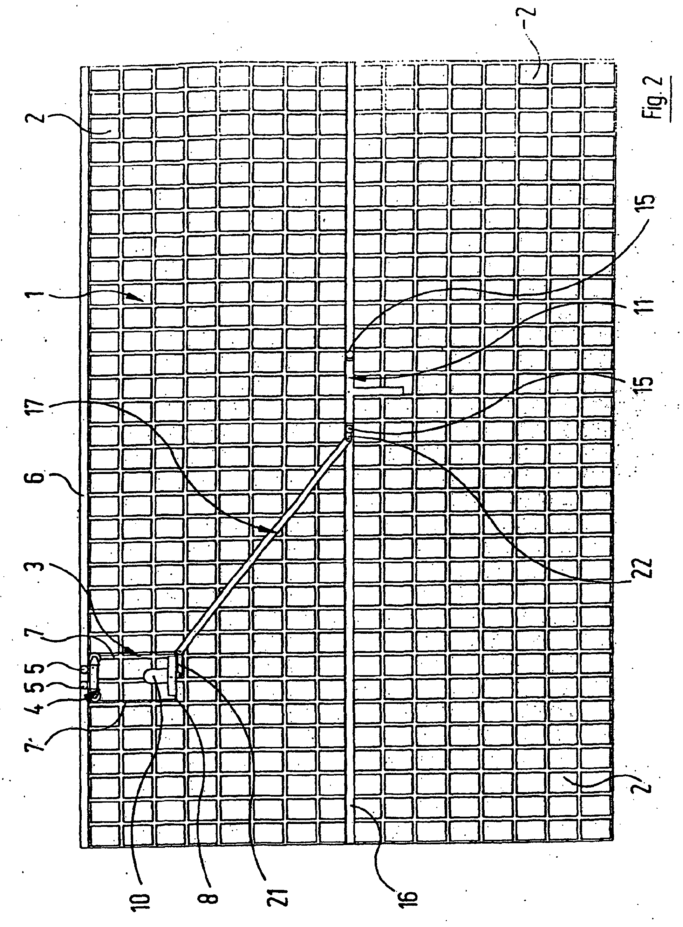

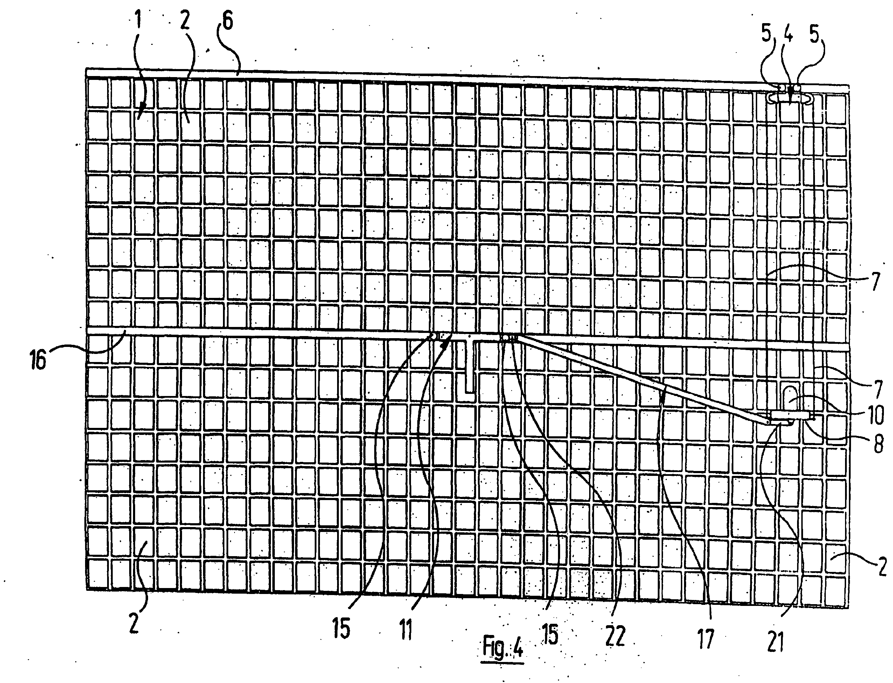

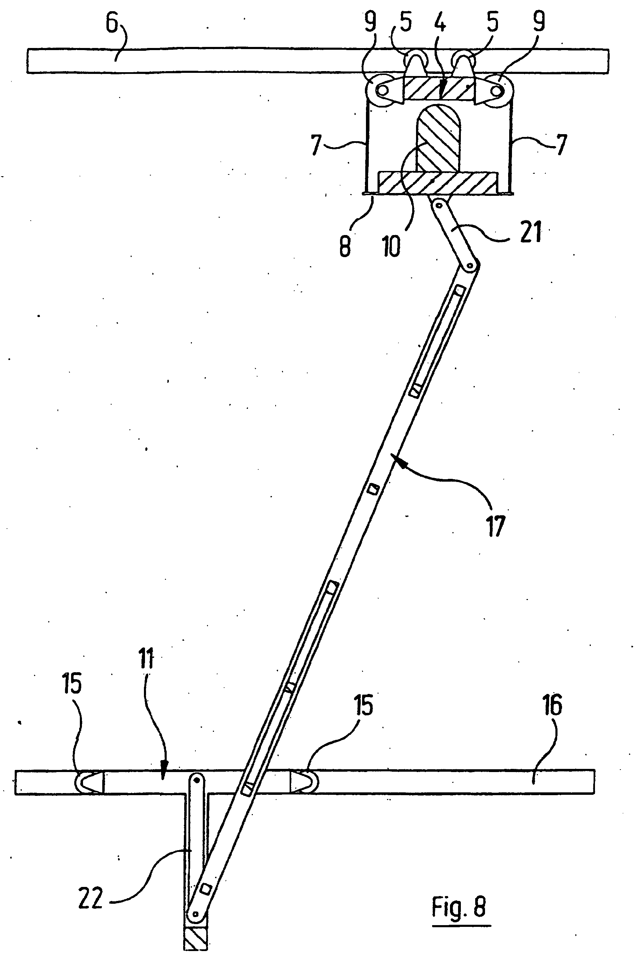

Die Hubplattform 8 des Regalbediengerätes 3 ist mit dem Stabilisierungswagen 11 über eine fachwerkartige Verbindungsstruktur verbunden, die insgesamt das Bezugszeichen 17 trägt. Die Verbindungsstruktur 17 weist zwei parallele Stangen 18 auf, die über senkrecht hierzu und schräg verlaufende Versteifungsstreben 20 miteinander verbunden sind. Die oberen Enden der beiden Stangen 18 der Verbindungsstruktur 17 sind jeweils gelenkig mit dem einen Ende eines Schwenkarmes 21 verbunden, dessen anderes Ende an der Unterseite der Hubplattform 8 angelenkt ist. Der Schwenkarm 21 ist besonders deutlich in den Figuren 2, 4 sowie 6 bis 8 zu erkennen. Der Schwenkarm 21 kann in der in den Figuren 1 und 2 dargestellten Position verriegelt werden.

Die unteren Enden der Stangen 18 der Verbindungskonstruktion 17 sind in ähnlicher Weise gelenkig mit einem Ende eines Schwenkarmes 22 verbunden, dessen anderes Ende jeweils etwa in der Mitte der zugeordneten Längstraverse 12, 13 des Stabilisierungswagens 11 angelenkt ist. Auch diese Schwenkarme 22 sind besonders in den Figuren 2, 4 und 6 bis 8 zu erkennen. Die Schwenkarme 22 lassen sich in der Position, die in den Figuren 1 und 2 dargestellt ist, sowie in einer hiergegen um 180° verdrehten Position an den Längstraversen 12, 13 des Stabilisierungswagens 11 verriegeln.

Die Horizontalposition des Tragwagens 3 entlang der Tragschiene 6 lässt sich durch ein geeignetes Positionsmesssystem ermitteln. In entsprechender Weise wird die Horizontalposition des Stabilisierungswagens 11 durch ein geeignetes Positionsmesssystem überwacht. Ein Höhenmesssystem schließlich liefert Informationen über die momentane vertikale Position der Hubplattform 8. Die Ausgangssignale der beiden Positionmessssysteme des Tragwagens 4 sowie des Stabilisierungswagens 11 und des Höhenmesssystemes der Hubplattform 8 werden einer Steuerung zugeführt.

Das oben beschriebene Regalbediengerät 3 arbeitet wie folgt:

In Figur 1 ist die Hubplattform 8 in einer Position im linken, oberen Bereich des Regalbediengerätes 1 dargestellt. Nun sei angenommen, dass die Hubplattform 8 aus dieser Position senkrecht nach unten herabgelassen werden soll. Die gewünschte Zielposition wird durch ein entsprechendes Steuersignal an die Steuerung vorgegeben. Diese Steuerung versetzt nunmehr die Seiltrommeln 9 des Tragwagens 4 so in Bewegung, dass sich die Hubplattform 8 absenkt. Gleichzeitig gibt die Steuerung an den Stabilisierungswagen 11 den Befehl, sich in Figur 1 nach rechts zu bewegen. Die Bewegung erfolgt dabei so, dass die gewünschte vertikale Fahrt der Hubplattform 8 ermöglicht wird, d. h., der horizontale Abstand des Stabilisierungswagens 11 vom Tragwagen und damit von der Hubplattform 8 wird proportional zum Kosinus des Neigungswinkels, den die Verbindungsstruktur 17 gegenüber der Horizontalen einnimmt, verändert. Die Entfernung zwischen dem Stabilisierungswagen 11 und der Hubplattform 8 ist also maximal und gleich der Länge der Verbindungsstruktur 17, wenn sich die Hubplattform 8 auf der Höhe der Führungsschiene 16 befindet und die Verbindungsstruktur 17 horizontal ausgerichtet ist.

Die Verbindungsstruktur 17 verhindert bei der geschilderten Vertikalbewegung des Hubwangens 8 zuverlässig alle Schwingungen, da in seitlicher Richtung wirkende Kräfte über die Verbindungsstruktur 17 auf den Stabilisierungswagen 11 und von diesem auf die beiden Hochregale 1 übertragen werden.

Soll die Hubplattform 8 unter Beibehaltung ihrer Höhenposition aus der in Figur 1 dargestellten Stellung horizontal nach rechts bewegt werden, so werden in die Steuerung entsprechende Steuersignale eingegeben. Diese Steuerung sorgt nunmehr dafür, dass die Translationsbewegung des Tragwagens 4 synchron und mit gleicher Geschwindigkeit zur Translationsbewegung des Stabilisierungswagens 11 erfolgt, so dass also die geometrische Relativbeziehung zwischen dem Tragwagen 4, der Verbindungsstruktur 17 und dem Stabilisierungswagens 11 während der gemeinsamen Fahrt in horizontaler Richtung unverändert bleibt.

Im allgemeinen sind selbstverständlich Horizontal- und Vertikalbewegungen der Hubplattform 8 überlagert, was durch die Steuerung problemlos bewältigt werden kann.

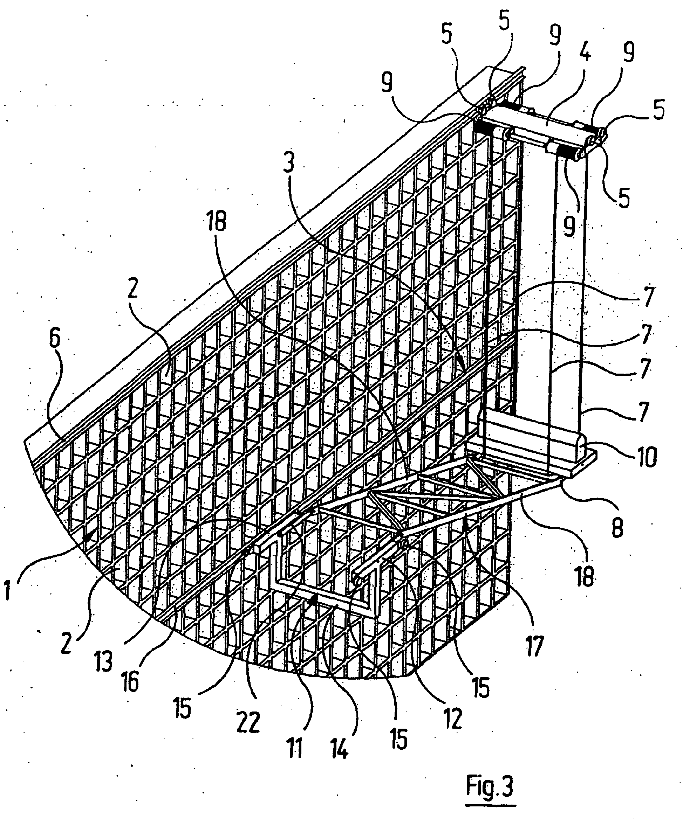

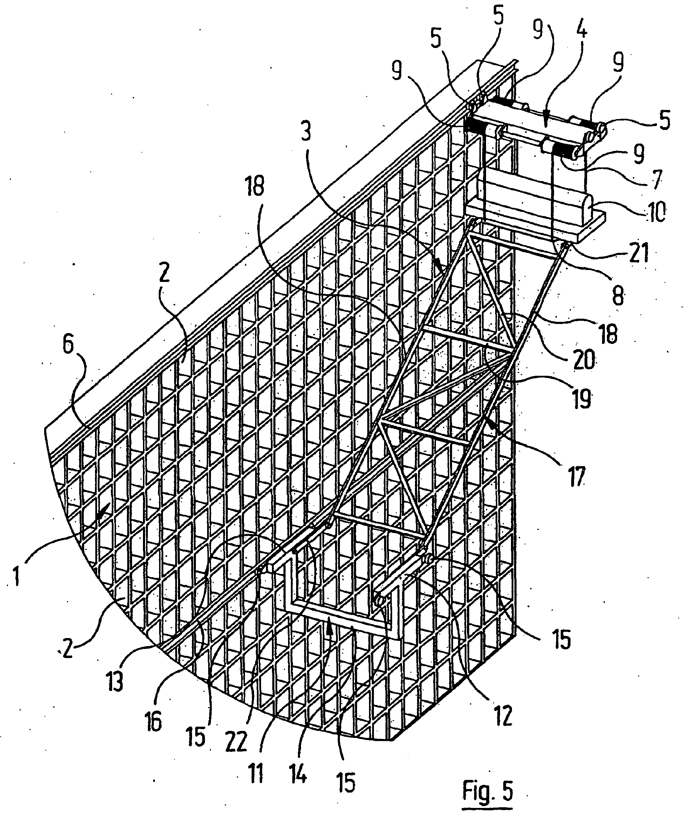

Um die gesamte Länge der Hochregale 1 bedienen zu können und gleichwohl den Stabilisierungswagen 11 nicht an einem Ende der Hochregale 1 über diese hinausfahren zu müssen, ist es möglich, dass der Tragwagen 4 auf die gegenüberliegende Seite des Stabilisierungswagens 11 wechselt. Wie dies geschieht, wird weiter unten im Einzelnen erläutert. Derartige Positionen, in denen sich der Tragwagen 4 auf der anderen Seite des Stabilisierungswagens 11 befindet, sind in den Figuren 3 sowie 5 und 6 dargestellt. In Figur 3 befindet sich die Hubplattform 8 im Bereich des rechten Endes des Hochregales 1, etwas unterhalb der halben Höhe, während in Figur 5 die Hubplattform 8 in derselben Horizontalposition bis nahe an den oberen Rand des Hochregales 1 angehoben ist.

Um den Wechsel des Tragwagens 4 auf die andere Seite des Stabilisierungswagens 11 zu ermöglichen, beispielsweise um aus der in Figur 1 dargestellten Position in die in Figur 5 dargestellte Position zu gelangen, wird folgendermaßen vorgegangen:

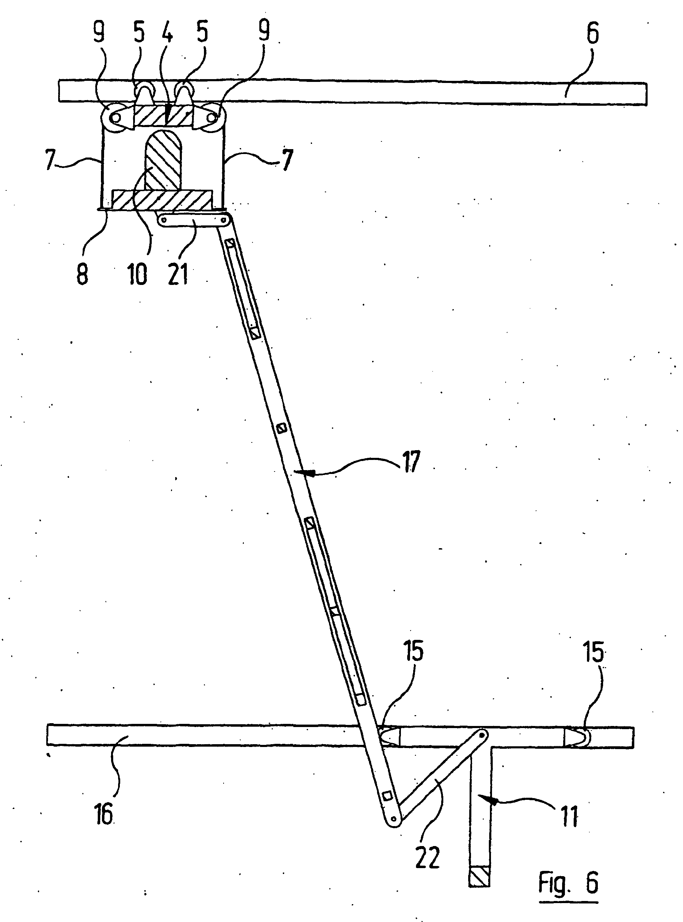

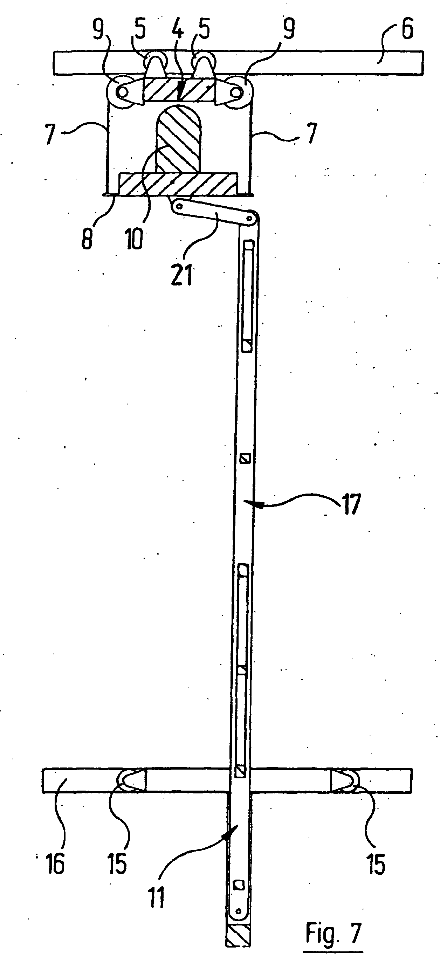

Zunächst wird die Hubplattform 8 vollständig nach oben gegen den Tragwagen 4 gefahren und an diesem verriegelt, so dass sie nicht mehr in den Seilen 7 frei schwingen kann. Sodann werden die Schwenkarme 21 der Hubplattform 8 und die Schwenkarme 22 des Stabilisierungswagens 11 entriegelt. Der Tragwagen 4 wird nunmehr auf den still stehenden Stabilisierungswagen 11 zubewegt. Diese Bewegung wird dadurch möglich, dass die Schwenkarme 22 des Stabilisierungswagens 11 nach unten verschwenkt werden, wie dies in Figur 6 dargestellt ist. Figur 7 zeigt den Zustand, in dem die Verbindungsstruktur 17 vertikal steht. Sie verdeckt in Figur 7 den ebenfalls vertikal stehenden Schwenkarm 22. Der Schwenkarm 21 der Hubplattform 8 hat sich dabei etwas aus seiner Normalposition heraus verschwenkt. Bei der Weiterfahrt des Tragwagens 4 an dem weiterhin still stehenden Stabilisierungswagen 11 vorbei verschwenkt die Verbindungsstruktur 17 gegenüber der Vertikalen numehr in entgegengesetztem Sinne; gleichzeitig wird der Schwenkwinkel des dem Hubwagen 8 zugeordneten Schwenkarmes 21 größer. Setzt der Tragwagen 4 seine Bewegung in dieser Richtung fort, so werden die Schwenkarme 22 wieder an den Stabilisierungswagen 11 heran geschwenkt, bis sie schließlich erneut die horizontale Ausrichtung erhalten haben, in der sie gegenüber der Ausgangsposition von Figur 6 um 180 Grad verschwenkt sind. Sie werden in dieser Position wieder verriegelt. In entsprechender Weise kehren auch die Schwenkarme 21 der Hubplattform 8 in ihre horizontale Position zurück, in der sie eine Schwenkbewegung von 180 Grad gegenüber ihrer Ausgangsposition von Figur 6 durchgeführt haben, und werden in dieser Position verriegelt.

Das Regalbediengerät 3 kann nunmehr auf der gegenüberliegenden Seite des Stabilisierungswagens 11 in der oben schon beschriebenen Weise arbeiten. Hierzu wird die Verriegelung der Hubplattform 8 an den Tragwagen 4 wieder gelöst.

Bei einem in der Zeichnung nicht dargestellten Ausführungsbeispiel besitzen der Stabilisierungswagen und/oder die Hubplattform keine Schwenkarme. Um gleichwohl einen Wechsel des Tragwagens 4 über den Stabilisierungswagen 11 hinaus zu ermöglichen, ist die Verbindungsstruktur durch eine teleskopartige Ausgestaltung verkürzbar. Normalerweise sind die Teleskopglieder der Verbindungsstruktur verriegelt. Dann läuft die Funktion dieses Ausführungsbeispiels des Regalbediengerätes in derselben Weise ab, wie dies oben an Hand der Figuren 1 bis 5 beschrieben wurde. Zum Seitenwechsel des Tragwagens wird die Teleskopierbarkeit der verbindungsstruktur freigegeben. Die Verbindungsstruktur kann sich also bei einer Annäherung des Tragwagens an den still stehenden Stabilisierungswagen verkürzen, bis sie in ihrer vertikalen Ausrichtung die kürzeste Länge erreicht hat. Nach dem Überschreiten des "Totpunktes" werden die Teleskopteile der Verbindungsstruktur dann wieder auseinander gefahren und bei Erreichen ihrer normalen Betriebslänge verriegelt. Dann kann der Normalbetrieb des Regalbediengerätes wieder aufgenommen werden.

## Patentansprüche

1. Regalbediengerät (3) mit
a) einem Tragwagen (4), der mittels eines Antriebs an mindestens einer im wesentlichen horizontalen Tragschiene (6) entlang eines Regalganges verfahrbar ist;
b) einer von dem Tragwagen (4) mitgeführten Hubplattform (8) zur Aufnahme von Lagergut (10);
c) einer Hubvorrichtung, mit welcher die Hubplattform (8) gegenüber dem Tragwagen (4) in vertikaler Richtung bewegbar ist;
d) einer Stabilisierungseinrichtung, welche eine seitliche Auslenkung der Hubplattform (8) gegenüber dem Tragwagen (4) verhindert, wobei
e) die Hubvorrichtung mindestens zwei Zugmittel (7) umfasst, an denen die Hubplattform (8) von dem Tragwagen (4) abgehängt ist;
**dadurch gekennzeichnet, dass**
f) die Stabilisierungseinrichtung umfasst:
fa) einen Stabilisierungswagen (11), der mittels eines eigenen Antriebs entlang mindestens einer in vertikalem Abstand parallel zur Tragschiene (6) verlaufenden Führungsschiene (11) verfahrbar ist;
fb) eine im wesentlichen starre, eine horizontale Erstreckungskomponente aufweisende Verbindungsstruktur (17), welche sowohl an der Hubplattform (8) als auch an dem Stabilisierungswagen (11) angelenkt ist;
fc) eine Steuerung, welche den horizontalen Abstand zwischen der Hubplattform (8) und dem Stabilisierungswagen (11) durch entsprechendes Verfahren des Stabilisierungswagens (11) bei einer Veränderung der Höhenposition der Hubplattform (8) so verändert, dass die Hubplattform (8) gegenüber dem Tragwagen (4) nur die gewünschte, insbesondere vertikale, Bewegung ausführen kann.

2. Regalbediengerät nach Anspruch 1, **dadurch gekennzeichnet, dass** die Verbindungsstruktur (17) zwei parallele Stangen (18) umfasst.

3. Regalbediengerät nach Anspruch 2, **dadurch gekennzeichnet, dass** die Verbindungsstruktur (17) durch die Stangen (18) verbindende Streben (19, 20) zu einem Fachwerk versteift ist.

4. Regalbediengerät nach einem der vorhergehenden Ansprüche, **dadurch gekennzeichnet, dass** die effektive Länge der Verbindungsstruktur (17) verkürzbar ist.

5. Regalbediengerät nach Anspruch 4, **dadurch gekennzeichnet, dass** mindestens ein Schwenkarm (22), der verschwenkbar mit einem Ende der Verbindungsstruktur (17) verbunden ist, an dem Stabilisierungswagen (11) angelenkt und an diesem in mindestens einer Winkelposition verriegelbar ist.

6. Regalbediengerät nach Anspruch 5, **dadurch gekennzeichnet, dass** an der Hubplattform (8) mindestens ein Schwenkarm (21), der verschwenkbar mit dem anderen Ende der Verbindungsstruktur (17) verbunden ist, angelenkt und an diesem in mindetens einer Winkelposition verriegelbar ist.

7. Regalbediengerät nach Anspruch 4, **dadurch gekennzeichnet, dass** die Verbindungsstruktur (17) gegeneinander teleskopierbare und in mindestens einer Relativlage gegeneinander verriegelbare Elemente aufweist.

8. Regalbediengerät nach einem der Ansprüche 4 bis 7, **dadurch gekennzeichnet, dass** die Hubplattform (8) in ihrer obersten Position an dem Tragwagen (4) verriegelbar ist.

## Claims

1. Storage and retrieval unit (3) having
a) a supporting carriage (4) which is movable along a rack aisle on at least one substantially horizontal supporting rail (6) by means of a drive;
b) a lifting platform (8) carried along by the supporting carriage (4) and intended for receiving storage items (10);
c) a lifting apparatus by means of which the lifting platform (8) is movable in the vertical direction relative to the supporting carriage (4);
d) a stabilising device which prevents lateral deflection of the lifting platform (8) relative to the supporting carriage (4),
wherein
e) the lifting apparatus comprises at least two traction means (7), on which the lifting platform (8) is suspended from the supporting carriage (4);
**characterized in that**
f) the stabilising device comprises:
fa) a stabilising carriage (11) which is movable by means of its own drive along at least one guide rail (11) running at a vertical distance from and parallel to the supporting rail (6);
fb) a substantially rigid connecting structure (17) having a horizontal extension component and articulated both on the lifting platform (8) and on the stabilising carriage (11);
fc) a control system which, in the event of a change in the vertical position of the lifting platform (8), changes the horizontal distance between the lifting platform (8) and the stabilising carriage (11), by corresponding movement of the stabilising carriage (11), in such a way that the lifting platform (8) can perform only the desired, in particular vertical, movement relative to the supporting carriage (4).

2. Storage and retrieval unit according to Claim 1, **characterised in that** the connecting structure (17) comprises two parallel bars (18).

3. Storage and retrieval unit according to Claim 2, **characterised in that** the connecting structure (17) is stiffened, by braces (19, 20) connecting the bars (18), to form a framework.

4. Storage and retrieval unit according to one of the preceding claims, **characterised in that** the effective length of the connecting structure (17) can be shortened.

5. Storage and retrieval unit according to Claim 4, **characterised in that** at least one swivel arm (22), which is swivellably connected to one end of the connecting structure (17), is articulated on the stabilising carriage (11) and is lockable to it in at least one angular position.

6. Storage and retrieval unit according to Claim 5, **characterised in that** at least one swivel arm (21), which is swivellably connected to the other end of the connecting structure (17), is articulated on the lifting platform (8) and is lockable to it in at least one angular position.

7. Storage and retrieval unit according to Claim 4, **characterised in that** the connecting structure has elements which are telescopable with respect to one another and lockable in at least one relative position with respect to one another.

8. Storage and retrieval unit according to one of Claims 4 to 7, **characterised in that** the lifting platform (8) is lockable in its uppermost position to the supporting carriage (4).

## Revendications

1. Transstockeur (3), avec
a) un chariot porteur (4), qui au moyen d'un entraînement peut être déplacé le long d'un couloir entre rayonnages sur au moins un rail porteur (6) sensiblement horizontal ;
b) une plate-forme de levage (8), emportée par le chariot porteur (4) et destinée à recevoir les marchandises entreposées (10) ;
c) un dispositif de levage, par lequel la plate-forme de levage (8) peut être déplacée en direction verticale par rapport au chariot porteur (4) ;
d) un équipement stabilisateur, qui empêche une déflexion latérale de la plate-forme de levage (8) par rapport au chariot porteur (4), sachant que
e) le dispositif de levage comprend au moins deux moyens de traction (7), par lesquels la plate-forme de levage (8) est suspendue au chariot porteur (4) ;
**caractérisé en ce que**
f) l'équipement stabilisateur comprend:
fa) un chariot stabilisateur (11), qui au moyen d'un propre entraînement peut être déplacé le long d'au moins un rail de guidage (16) s'étendant à distance verticale parallèlement au rail porteur (6) ;
fb) une structure de liaison (17) essentiellement rigide, qui présente une composante de développement horizontale et qui est articulée à la fois à la plate-forme de levage (8) et au chariot stabilisateur (11) ;
fc) une commande qui, par un déplacement correspondant du chariot stabilisateur (11) lors d'une modification de la position en hauteur de la plate-forme de levage (8), modifie la distance horizontale entre la plate-forme de levage (8) et le chariot stabilisateur (11) de telle sorte que la plate-forme de levage (8) peut accomplir uniquement le mouvement souhaité, notamment vertical, par rapport au chariot porteur (4).

2. Transstockeur selon la revendication 1, **caractérisé en ce que** la structure de liaison (17) comprend deux barres parallèles (18).

3. Transstockeur selon la revendication 2, **caractérisé en ce que** la structure de liaison (17) est renforcée en une charpente métallique par des entretoises (19, 20) reliant les barres (18).

4. Transstockeur selon l'une des revendications précédentes, **caractérisé en ce que** la longueur effective de la structure de liaison (17) peut être raccourcie.

5. Transstockeur selon la revendication 4, **caractérisé en ce qu'**au moins un bras pivotant (22), qui est relié à pivotement à une extrémité de la structure de liaison (17), est articulé sur le chariot stabilisateur (11) et peut être verrouillé sur ce dernier dans au moins une position angulaire.

6. Transstockeur selon la revendication 5, **caractérisé en ce qu'**au moins un bras pivotant (21), qui est relié à pivotement à l'autre extrémité de la structure de liaison (17), est articulé sur la plate-forme de levage (8) et peut être verrouillé sur cette dernière dans au moins une position angulaire.

7. Transstockeur selon la revendication 4, **caractérisé en ce que** la structure de liaison (17) présente des éléments télescopiques les uns par rapport aux autres, qui peuvent être verrouillés dans au moins une position relative mutuelle.

8. Transstockeur selon l'une des revendications 4 à 7, **caractérisé en ce que** la plate-forme de levage (8) peut être verrouillée dans sa position la plus haute sur le chariot porteur (4).
